# FASCICULE DE BREVET EUROPEEN

(11) **EP 1 367 269 B1**
(45) Date de publication et mention de la délivrance du brevet: **13.10.2004**
(21) Numéro de dépôt: 03354038.6
(22) Date de dépôt: 23.04.2003
(51) Int. Cl.: F16B 31/02

(54) **Dispositif de montage sécable à vis pour un appareillage électrique**
Abtrennbare Montageeinrichtung mit einer Schraube für ein elektrisches Gerät
Separable mounting device including a screw for an electrical apparatus

(30) Priorité: 29.05.2002 FR 0206540
(43) Date de publication de la demande: 03.12.2003
(73) Titulaire: Schneider Electric Industries SAS, 92500 Rueil-Malmaison (FR)
(72) Inventeur: Aureyre, Laurent, Schneider Electric Ind. SAS, 38050 Grenoble Cedex 09 (FR); Berguirol, Yves, Schneider Electric Ind. SAS, 38050 Grenoble Cedex 09 (FR); Nereau, Jean-Pierre, Schneider Electric Ind. SAS, 38050 Grenoble Cedex 09 (FR); Toti Buttin, Frédéric, Schneider Electric Ind. SAS, 38050 Grenoble Cedex 09 (FR)
(74) Mandataire: Tripodi, Paul

(56) Documents cités:
- FR-A- 2 593 572
- GB-A- 2 067 699
- PATENT ABSTRACTS OF JAPAN vol. 1997, no. 10, 31 octobre 1997 (1997-10-31) -& JP 09 144734 A (MARUEMU SEISAKUSHO:KK), 3 juin 1997 (1997-06-03)

## Description

### DOMAINE TECHNIQUE DE L'INVENTION

L'invention est relative à un dispositif permettant le montage d'une vis à un couple prédéterminé.

### ETAT DE LA TECHNIQUE ANTERIEURE

Dans le document GB 898026 est décrite une vis sécable comportant une tige filetée, une première tête polygonale située à proximité de la tige et une deuxième tête, séparée de la première par un col de rupture. On monte la vis en exerçant un couple sur la tête polygonale la plus éloignée de la tige. Le col de rupture est rompu lors du serrage de la vis, lorsque le couple de serrage atteint une valeur déterminée par le diamètre minimal du col. Une telle disposition a l'avantage de donner à l'opérateur une indication claire que le couple prescrit pour le montage a été atteint. La tête la plus proche de la tige reste utilisable pour le démontage et éventuellement la remise en place de la vis. Toutefois, la tête la plus proche de la tige a une dimension en section plus importante que la deuxième tête, ce qui permet de frauder le limiteur de couple en serrant directement la première tête, sans contrôle du couple de serrage. De plus, la deuxième tête une fois cassée, constitue une pièce métallique qui, si elle est oubliée dans l'environnement direct du montage, risque de provoquer un incident électrique. Enfin, il n'est pas possible de prévoir un isolant électrique couvrant la tête la plus proche de la tige et empêchant un opérateur de toucher la vis montée.

On connaît déjà, notamment par le document FR2 593 572, une vis à limitation de couple et à tête isolée pour application électrique, constituée essentiellement de trois parties assemblées de manière à constituer une pièce monobloc : une tête sur laquelle s'exerce le couple de vissage, une tige filetée et une partie intermédiaire en matériau isolant montée entre la tête et la tige filetée, servant à la transmission du couple de vissage et assurant l'isolation de la tête. La tête comprend elle-même deux parties hexagonales, reliées par un col de rupture assurant une limitation du couple de serrage. Lorsque l'on monte la vis, la tête se rompt au niveau du col et la partie supérieure de la tête tombe, la partie inférieure de la tête restant disponible pour le démontage. La partie supérieure rompue est en métal et peut donc provoquer un accident électrique si elle est oubliée dans l'environnement direct de la vis. Par ailleurs, l'architecture de la vis, et notamment la présence d'une partie intermédiaire en matériau plastique devant transmettre l'intégralité du couple de vissage, interdit en pratique son utilisation lorsque le couple de vissage est élevé. La partie intermédiaire a un encombrement en hauteur relativement important. Enfin, ce principe impose au montage et plus encore au démontage, l'utilisation de clefs à relief en creux (clefs à six pans creux) relativement encombrantes, car au moins le relief de la partie de la tête restant disponible pour le démontage est un relief sortant.

Dans le document FR 2791404 est décrite une vis à serrage calibré incluant une tige avec une partie filetée et une section à profil polygonal, une coiffe formant une tête de manoeuvre et se prolongeant par une jupe entourant la section à profil polygonal et pourvue, sur sa face interne, de reliefs, et une bague élastique logée entre la section à profil polygonal et la jupe, cette bague étant pourvue, sur sa surface radiale externe, de reliefs aptes à coopérer avec les reliefs de la jupe pour l'entraînement en rotation de la bague et, sur sa surface radiale interne, d'au moins un ergot apte à transmettre un mouvement de rotation de la bague à la tige au niveau de sa section à profil polygonal et à glisser sur ce profil polygonal lorsque l'effort résistant de la tige est supérieur à une valeur prédéterminée. Le glissement de l'ergot sur le profil polygonal est obtenu par déformation de la bague qui en pratique doit être en matériau plastique. De ce fait, un tel dispositif ne permet pas un serrage à un couple élevé et précis. Par ailleurs, la vis de serrage ne donne pas une indication visuelle immédiate du fait que le couple de serrage requis a été effectivement atteint.

### EXPOSE DE L'INVENTION

L'invention vise donc remédier aux inconvénients de l'état de la technique, de manière à proposer un dispositif qui permette et impose lors du montage d'une vis un serrage calibré avec un couple de serrage à la fois élevé et précis, à l'aide d'outils standards.

A cet effet, l'invention a pour objet un dispositif de montage par vissage à limitation du couple de serrage, comportant :
- une vis pourvue d'une tête de vis et d'une tige filetée définissant un axe géométrique de référence,
- un embout de serrage monobloc sécable comportant :
   - une tête de serrage ayant un relief de serrage pour coopérer avec un outil de serrage,
   - un relief d'accouplement pour coopérer avec la tête de vis, assurant dans une position d'engagement avec la tête de vis un accouplement en rotation autour de l'axe géométrique de référence entre l'embout de serrage et la tête de vis, et mobile vers une position de désengagement par translation par rapport à la tête de vis, suivant l'axe géométrique de référence,
   - une zone de rupture, située entre la tête de serrage et le relief d'accouplement et reliant la tête de serrage au relief d'accouplement de telle manière que la tête de serrage et le relief d'accouplement sont solidaires en rotation autour de l'axe géométrique de référence, la zone de rupture étant dimensionnée pour se rompre lorsqu'elle est soumise à un couple dépassant un seuil prédéterminé de rupture,
- des premiers moyens d'accouplement pour solidariser en translation suivant l'axe géométrique de référence la tête de serrage et le relief d'accouplement lorsque la zone de rupture est rompue ;
- des deuxièmes moyens d'accouplement pour solidariser en translation suivant l'axe géométrique de référence la tête de vis au relief d'accouplement en position d'accouplement tant que la zone de rupture n'est pas rompue, les deuxièmes moyens d'accouplement pouvant passer dans un état de désolidarisation qui permet de faire passer le relief d'accouplement en position de désengagement, lorsque la zone de rupture est rompue et qu'est appliqué aux deuxièmes moyens d'accouplement une force ou un couple dépassant un seuil donné.

Les premiers moyens d'accouplement permettent de maintenir solidaires l'une de l'autre les deux parties de l'embout de serrage, une fois que celui-ci est cassé au niveau du col. Les deuxièmes moyens d'accouplement permettent de présenter la vis et l'embout de manière monobloc pour le montage, de manière à empêcher un montage de vis par d'autre moyen que par l'intermédiaire de l'embout. Le montage est alors particulièrement simple : pour s'assurer du serrage au couple, il suffit de visser l'embout jusqu'à rompre la zone de rupture, dont le couple de rupture est précis, puisqu'il s'agit d'une partie dédiée uniquement à cette fonction. Après quoi, il suffit de forcer sur les deuxièmes moyens d'accouplement pour séparer l'embout de serrage de la vis. L'encombrement du dispositif avant rupture des deuxièmes moyens d'accouplement est substantiellement supérieur de son encombrement après rupture, de sorte qu'il est possible de prévoir une interférence entre l'embout de serrage et un couvercle par exemple, interdisant de fermer le couvercle tant que la partie supérieure de la vis n'est pas rompue. En d'autres termes, le dispositif permet de mettre à profit l'encombrement de l'embout pour empêcher la suite des opérations de montage tant que l'embout n'est pas séparé de la vis. Ceci permet de s'assurer que la vis a bien été serrée au couple voulu, puisque pour séparer l'embout de serrage il est nécessaire d'avoir au préalable cassé l'embout.

Préférentiellement, les deuxièmes moyens d'accouplement comportent :
- une première portion solidaire en rotation de la tête de serrage,
- une deuxième portion solidaire en rotation de la tête de vis, et
- une troisième portion intermédiaire sécable solidarisant la première portion à la deuxième portion, la troisième portion étant dimensionnée pour ne pas se rompre tant que la zone de rupture n'est pas rompue et pour se rompre et faire ainsi passer les deuxièmes moyens d'accouplement dans l'état de désengagement, lorsque la zone de rupture est rompue et que la troisième portion est soumise à un couple dépassant un seuil prédéterminé de séparation inférieur au seuil prédéterminé de rupture.

Cette disposition permet d'assurer la rupture de la zone de rupture de l'embout de serrage et la rupture de la portion intermédiaire des deuxièmes moyens d'accouplement d'un seul et même geste. Elle garantit qui plus est que l'embout ne sera pas séparé de la vis tant que la vis n'aura pas été serrée au couple de rupture.

En pratique, on obtient ce séquencement judicieux des ruptures en prévoyant que les deuxièmes moyens d'accouplement ont une rigidité en torsion suivant l'axe géométrique de référence entre la première portion et la deuxième portion, qui est inférieure celle de l'embout. La rigidité à la torsion dont il est question ici se définit très simplement comme le rapport entre le couple exercé suivant l'axe géométrique de référence sur la tête de serrage lorsque la tête de vis est bloquée d'une part, et l'angle de déformation résultant, mesuré au niveau de la tête de serrage, d'autre part. Tant que l'embout de serrage n'est pas rompu, l'embout de serrage et les deuxièmes moyens d'accouplement sont disposés en parallèle et c'est l'embout de serrage qui impose l'angle de déformation résultant du couple de serrage exercé sur la tête de l'embout, du fait de sa plus grande rigidité. Par contre, dès que la zone de rupture est rompue, le couple est intégralement transmis aux deuxièmes moyens d'accouplement qui se rompent presque instantanément, permettant la séparation entre l'embout et la vis.

Pour obtenir les rigidités recherchées, on peut notamment choisir pour les deuxièmes moyens d'accouplement un matériau ayant un module d'élasticité transversal module de Coulomb bien moins élevé que le module de Coulomb du matériau constitutif de l'embout de serrage monobloc.

En pratique, les premiers moyens d'accouplement et les deuxièmes moyens d'accouplement sont réalisés d'un seul bloc en matière plastique isolante. l'embout est métallique. La fabrication du dispositif est particulièrement simple car il suffit de surmouler la partie plastique sur l'embout métallique. Le couple de rupture est particulièrement précis.

Avantageusement, le bloc en matière plastique isolante enveloppe l'embout métallique en laissant un accès au relief de serrage. Les premiers moyens d'accouplement ont ainsi une fonction supplémentaire d'isolation électrique de l'embout On peut également prévoir que les deuxièmes moyens d'accouplement comportent une jupe en matériau plastique isolant enveloppant au moins partiellement la tête de vis et restant solidaire de la tête de vis dans l'état de désolidarisation. Ainsi, les deuxièmes moyens d'accouplement servent à l'isolation électrique de la tête de vis.

Avantageusement, la tête de vis comporte un relief de serrage identique au relief de serrage de l'embout, l'embout étant conformé de telle manière que le relief de serrage de la tête de vis est inaccessible tant que le relief d'accouplement est en position d'engagement. On peut ainsi procéder au montage et au démontage avec le même outil standard.

Selon un mode de réalisation, que le relief de serrage de la tête de vis et le relief de serrage de l'embout sont en creux. Ceci permet de réaliser un montage dans un environnement exigu.

L'invention a également trait à un kit comportant :
- un appareillage électrique pourvu d'au moins une borne électrique de raccordement à vis,
- au moins un dispositif de montage par vissage selon la description précédente, pour fixer la borne de raccordement à un conducteur électrique.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente en coupe axiale un dispositif de montage suivant un premier mode de réalisation de l'invention;
- la figure 2 représente en coupe axiale un dispositif de montage suivant un deuxième mode de réalisation de l'invention;
- la figure 3 représente en coupe axiale un dispositif de montage suivant un troisième mode de réalisation de l'invention.

### DESCRIPTION DETAILLEE D'UN MODE DE REALISATION

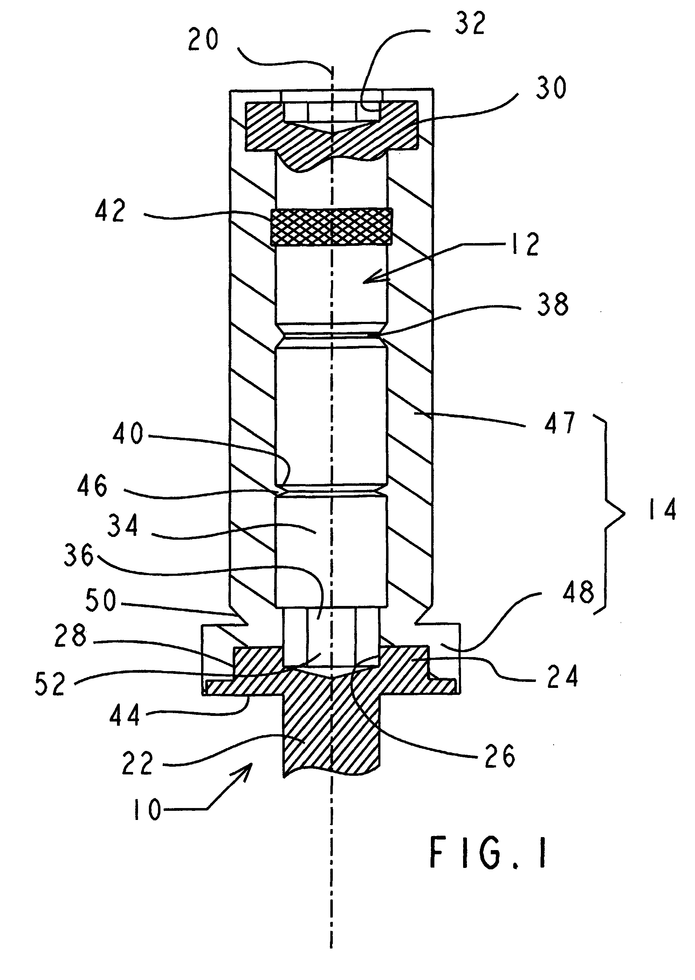

En référence à la figure 1, un dispositif de montage selon l'invention se présente, avant montage, comme la superposition d'une vis métallique 10, d'un embout de serrage monobloc 12 également métallique, et d'un manchon isolant 14 en matière synthétique enveloppant l'embout de serrage 12 et la tête de la vis 10, ces éléments ayant un axe géométrique de référence 20 commun. La vis 10 est constituée d'une tige filetée 22 suivant une hélice d'axe 20 et d'une tête cylindrique 24 formant un relief de serrage à six pans creux 26. Le pourtour cylindrique 28 de la tête 24 est moleté. L'embout de serrage 12 comporte une tête cylindrique 30 munie d'un relief de serrage 32 à six pans creux identique à celui de la tête de vis 24, une tige intermédiaire 34 et une extrémité hexagonale 36 enfoncée dans le relief à six pans creux 26 de la tête de vis 24. Un col de rupture 38, en pratique une entaille, est formé sur la tige intermédiaire 34 entre ses deux extrémités et divise l'embout 12 en une partie supérieure comportant la tête 30 et une partie inférieure comportant l'extrémité hexagonale 36. Une gorge radiale 40 est formée entre le col 38 et l'extrémité hexagonale 36. Entre la tête 30 et le col 38, une portion de la tige prend un relief moleté 42. Le manchon isolant 14 est surmoulé radialement sur l'embout de serrage 12 et la tête de la vis 24, laissant accessible le relief de serrage à six pans creux 32 de la tête 30 de l'embout. Le manchon forme un corps 47 recouvrant l'embout 12 et une jupe 48 qui recouvre la tête de vis 24. La tige 22 de la vis et l'épaulement 44 formé par la partie inférieure de la tête de vis 24 ne sont pas recouverts. Une entaille radiale de rupture 50 située juste au-dessus de la tête de vis 24 sépare le corps 47 de la jupe 48. Les portions moletées 28, 42 de la tête de vis et de la tige intermédiaire de l'embout de serrage constituent des zones de solidarisation respectivement entre le manchon 14 et la vis 10 d'une part, et entre le manchon 14 et la partie supérieure de l'embout 12 d'autre part. Une nervure intérieure 46 est formée lors du moulage du manchon 14 au niveau de la gorge 40. Ainsi sont réalisés des premiers moyens d'accouplement en translation suivant l'axe 20, entre la tête de serrage 30 et l'extrémité hexagonale 36, par l'intermédiaire de la zone moletée 42, du corps 47 du manchon 14 et de la nervure 46 insérée dans la gorge 40. Des seconds moyens d'accouplement en translation sont également obtenus entre la tête de vis 24 et l'extrémité hexagonale 36, par l'intermédiaire de la jupe 48, de l'entaille 50, du corps 47 du manchon 14 et de la nervure 46 insérée dans la gorge 40.

Pour monter la vis 10, on présente le dispositif de montage monobloc en position de vissage, et on utilise une clef hexagonale mâle insérée dans la tête 30 de l'embout pour visser le dispositif suivant l'axe 20. Le couple de vissage est quasi-intégralement transmis par la tige intermédiaire 34 à la tête de vis 24 et le manchon 14 n'est quasiment pas sollicité. Lorsque la vis 10 se bloque, l'opérateur doit encore imposer un couple suffisant pour rompre la tige intermédiaire 34 au niveau de la zone de rupture 38. Ce couple de rupture est calibré pour correspondre au couple de serrage souhaité pour la vis 10 dans son application. Une fois le col cassé 38, la tête 30 de l'embout reste solidaire de la tête de vis 24, par l'intermédiaire du manchon 14. Un faible couple exercé sur la tête 30 de l'embout, et transmis au manchon 14 au niveau de la zone moletée de fixation 42, suffit à provoquer la rupture du manchon 14 au niveau de l'entaille 50, car l'extrémité du manchon 14 est solidarisée à la tête de vis 24 par la zone moletée 28. Il y a alors séparation du dispositif de montage en deux parties : la vis 10 d'une part, dont la tête 26 est isolée par la jupe 48 du manchon, et le sous-ensemble constitué par l'embout 12 et la partie supérieure du manchon 14 d'autre part. Ce sous-ensemble présente une surface isolante cylindrique sur la majeure partie de sa périphérie, ce qui permet d'éviter tout risque de court-circuit si ce sous-ensemble est oublié. Il est à noter que le dispositif impose un couple de serrage de la vis précis correspondant au couple de rupture du col, car tant que le col et le manchon ne sont pas rompus, le dispositif reste d'un seul tenant, et l'encombrement de l'embout interdit les opérations de montage devant succéder au vissage de la vis. Il n'est pas non plus possible de frauder le limiteur de couple puisque la vis 10 n'offre pas de prise tant qu'elle est solidaire de l'embout 12, de sorte que l'on garantit que la vis 10 n'est pas serrée au-delà du couple de rupture. Enfin, la rupture au niveau de l'entaille 50 donne accès au relief à six pans creux de la tête de vis, par l'intermédiaire d'un orifice 52 libéré par l'extrémité hexagonale 36, ce qui permet le cas échéant le démontage de la vis 10. L'outil de démontage peut être identique à l'outil de montage car les reliefs de montage 26 de la tête de vis et ceux 32 de la tête de l'embout sont identiques.

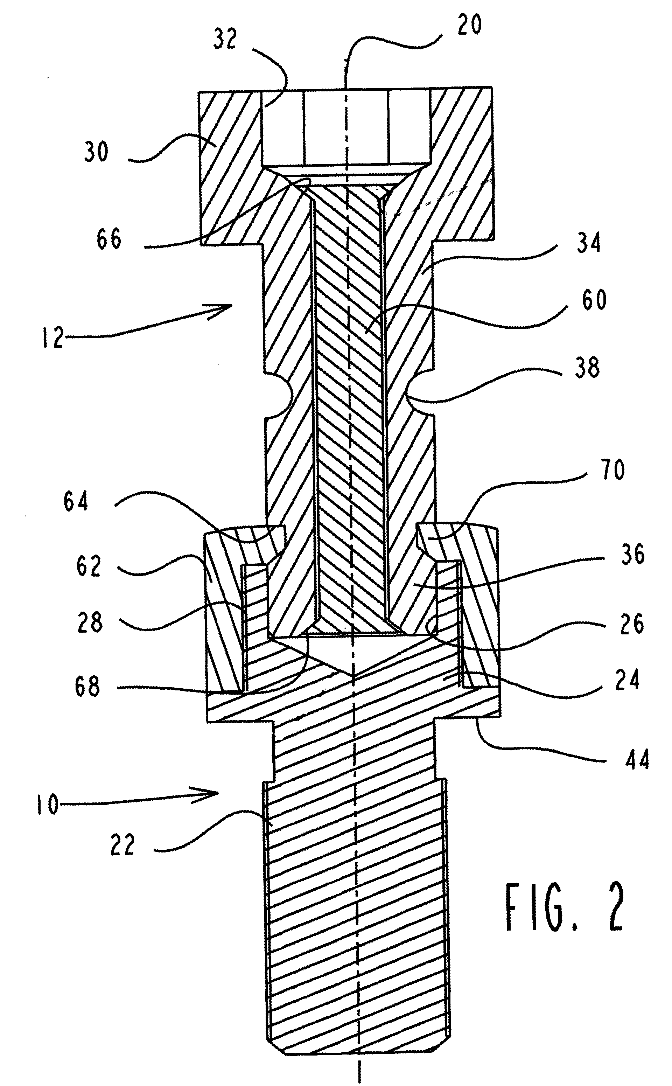

En référence à la figure 2, un dispositif de montage selon un deuxième mode de réalisation de l'invention est constitué d'une vis 10, d'un embout de serrage 12, d'une tige d'accouplement 60 et d'une coiffe isolante 62, disposées le long d'un même axe géométrique de référence 20.

Comme dans le premier mode de réalisation de l'invention, la vis 10 est constituée d'une tige filetée 22 et d'une tête 24, cette tête formant un épaulement 44, un relief de serrage 26 à six pans creux, et un relief de moletage 28 sur son pourtour cylindrique. L'embout métallique 12 comporte une tête 30 pourvue d'un relief de serrage 32 identique à celui de la tête de vis, cette tête se prolongeant par un corps 34 dont l'extrémité hexagonale 36 est insérée dans le relief en creux 26 de la tête de vis. Le corps 34 est pourvu d'un col radial de rupture 38, et d'une gorge 64 située à proximité de la tête de vis 24. L'embout 12 est tubulaire, ce qui permet l'insertion de la tige d'accouplement 60, dont les extrémités sont repoussées pour venir s'arrêter sur des chanfreins 66, 68 pratiqués dans l'embout. La coiffe 62 est solidarisée au corps par une lèvre 70 pénétrant dans la gorge 64. La coiffe 62 est également solidarisée à la tête de vis 24 au niveau de la partie cylindrique moletée 28.

Pour monter la vis 10, on présente le dispositif de montage monobloc en position de vissage, et on utilise une clef hexagonale mâle insérée dans la tête 30 de l'embout pour visser le dispositif. Le couple de vissage est intégralement transmis à la tête de vis par l'intermédiaire du corps 34 de l'embout La coiffe 62 n'est pas sollicitée. Lorsque la vis 10 se retrouve bloquée en fin de course, il est nécessaire d'exercer un couple de rupture sur la tête 30 de l'embout pour obtenir une rupture de l'embout au niveau du col de rupture 38. A ce moment, la tête 30 de l'embout reste solidaire en translation de l'extrémité hexagonale 36, par l'intermédiaire de la tige d'accouplement 60 qui autorise toutefois un mouvement de rotation de la tête 30 de l'embout par rapport à l'extrémité hexagonale 36. Pour désolidariser l'embout 12 de la tête de vis 24, il est nécessaire de tirer axialement sur la tête de l'embout 30, ce qui a pour effet de déformer la lèvre 70, qui sort de la gorge 64 et libère l'embout. Une fois cette traction exercée, l'embout 12 vient en bloc, toujours maintenu par la tige d'accouplement 60. La coiffe 62 reste sur la tête de vis 24 et constitue un isolement de la tête de vis. Le relief à six pans creux 26 de la tête de vis est accessible pour le démontage. Ce mode de réalisation illustre que l'on peut dissocier les fonctions d'accouplement en translation entre les deux parties sécables de l'embout, de la fonction d'accouplement entre l'embout et la vis.

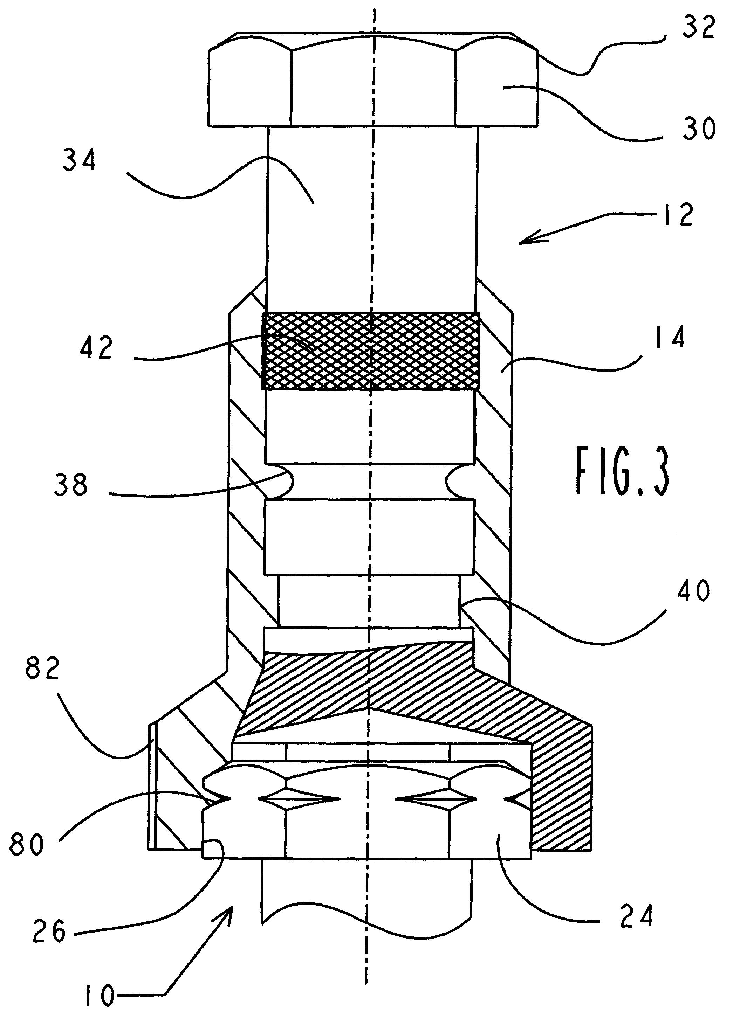

Sur la figure 3 est représenté un dispositif de montage selon un troisième mode de réalisation de l'invention. Le dispositif comporte une vis 10, un embout sécable 12 et un manchon d'accouplement 14. Contrairement aux modes de réalisation précédents, la tête 24 de la vis a un relief de serrage mâle hexagonal 26. Ce relief 26 comporte des saignées radiales 80 dans les coins. L'embout 12 est muni à une extrémité d'une tête 30 ayant la même forme hexagonale 32 que la tête de vis et, à l'autre extrémité, d'une clé à six pans creux 36 dans laquelle est insérée la tête de vis. Cette clé 36 est munie d'au moins une fente longitudinale 82 donnant accès à l'un des angles de la tête de vis 24. Le corps de l'embout est constitué d'une tige 34 comportant un col sécable 38, un moletage d'accouplement 42 situé entre le col 38 et la tête 30 de l'embout, et une gorge 40 située entre le col 38 et la clef 36. Le manchon d'accouplement 14 est surmoulé sur l'embout 12. Il est solidaire de l'embout au niveau du moletage 42 et de la gorge 40, et solidaire de la tête de vis 24 au niveau de la fente 82 et de la saignée 80 correspondante.

Pour monter la vis 10, on présente le dispositif de montage monobloc en position de vissage, et on utilise une clef hexagonale femelle pour visser le dispositif par la tête 30 de l'embout. Le couple de vissage est transmis par la tige 34 à la tête de vis 24 et le manchon 14 n'est pas sollicité. Lorsque la vis 10 se bloque, l'opérateur doit encore imposer un couple suffisant pour rompre la tige 34 au niveau du col 38. Une fois le col cassé, les deux parties de l'embout restent solidaires l'une de l'autre par l'intermédiaire du manchon 14. Un faible couple exercé sur la tête 30 de l'embout, transmis au manchon 14 au niveau de la zone moletée 42, suffit à provoquer la rupture du manchon au niveau de la saignée 80. Il y a alors séparation du dispositif de montage en deux parties : la vis 10 d'une part, et le sous-ensemble constitué par l'embout 12 et le manchon 14 d'autre part.

Naturellement, diverses modifications sont possibles.

La zone de rupture 38 de l'embout peut prendre toute forme permettant une rupture à un couple prédéterminé en torsion : col, entaille, gorge, amorce de rupture etc..

Dans le premier mode de réalisation, le corps 47 du manchon peut ne pas recouvrir la tête de serrage 30, ce qui permet le cas échéant de diminuer l'encombrement du dispositif.

L'accouplement entre la tête de vis 24 et l'embout sécable 12 peut se faire par tout relief approprié : fente, créneaux, empreinte cruciforme, carrée ou de toute autre forme, mâle ou femelle. La tête de vis 24 ne comporte pas nécessairement d'épaulement. La tête de vis 24 n'est pas nécessairement d'un encombrement radial supérieur à celui de la partie filetée 22.

Naturellement, l'invention trouve tout son intérêt lorsque le couple de serrage est important, auquel cas l'utilisation de métaux pour l'embout 12 et la vis 10 est particulièrement avantageuse. Toutefois, l'utilisation d'autres matériaux n'est pas exclue.

## Revendications

1. Dispositif de montage par vissage à limitation du couple de serrage, comportant :
- une vis (10) pourvue d'une tête de vis (24) et d'une tige filetée (22) définissant un axe géométrique de référence (20),
- un embout de serrage monobloc sécable (12) comportant :
- une tête de serrage (30) ayant un relief de serrage (32) pour coopérer avec un outil de serrage,
- un relief d'accouplement (36) pour coopérer avec la tête de vis (24), assurant dans une position d'engagement avec la tête de vis (24) un accouplement en rotation autour de l'axe géométrique de référence (20) entre l'embout de serrage (12) et la tête de vis (10), et mobile vers une position de désengagement par translation par rapport à la tête de vis (24), suivant l'axe géométrique de référence (24),
- une zone de rupture (38), située entre la tête de serrage (30) et le relief d'accouplement (36) et reliant la tête de serrage (30) au relief d'accouplement (36) de telle manière que la tête de serrage (30) et le relief d'accouplement (36) sont solidaires en rotation autour de l'axe géométrique de référence, la zone de rupture (38) étant dimensionnée pour se rompre lorsqu'elle est soumise à un couple dépassant un seuil prédéterminé de rupture,
**caractérisé en ce qu'**il comporte en outre :
- des premiers moyens d'accouplement (40, 60) pour solidariser en translation suivant l'axe géométrique de référence la tête de serrage et le relief d'accouplement lorsque la zone de rupture est rompue ;
- des deuxièmes moyens d'accouplement (50) pour solidariser en translation suivant l'axe géométrique de référence la tête de vis (24) au relief d'accouplement (36) en position d'accouplement tant que la zone de rupture n'est pas rompue, les deuxièmes moyens d'accouplement pouvant passer dans un état de désolidarisation qui permet de faire passer le relief d'accouplement en position de désengagement, lorsque la zone de rupture est rompue et qu'est appliqué aux deuxièmes moyens d'accouplement une force ou un couple dépassant un seuil donné.

2. Dispositif selon la revendication 1, **caractérisé en ce que** les deuxièmes moyens d'accouplement comportent :
- une première portion (47) solidaire en rotation de la tête de serrage,
- une deuxième portion (28) solidaire en rotation de la tête de vis, et
- une troisième portion intermédiaire sécable (50) solidarisant la première portion à la deuxième portion, la troisième portion étant dimensionnée pour ne pas se rompre tant que la zone de rupture n'est pas rompue et pour se rompre et faire ainsi passer les deuxièmes moyens d'accouplement dans l'état de désengagement, lorsque la zone de rupture (38) est rompue et que la troisième portion est soumise à un couple dépassant un seuil prédéterminé de séparation inférieur au seuil prédéterminé de rupture.

3. Dispositif selon la revendication 2, **caractérisé en ce que** les deuxièmes moyens d'accouplement ont une rigidité en torsion suivant l'axe géométrique de référence entre la première portion et la deuxième portion, qui est inférieure à celle de l'embout.

4. Dispositif selon la revendication 3, **caractérisé en ce que** les premiers moyens d'accouplement et les deuxièmes moyens d'accouplement sont réalisés d'un seul bloc (14) en matière plastique isolante.

5. Dispositif selon la revendication 4, **caractérisé en ce que** l'embout (12) est métallique.

6. Dispositif selon la revendication 5, **caractérisé en ce que** le bloc (14) en matière plastique isolante enveloppe l'embout métallique en laissant un accès au relief de serrage.

7. Dispositif selon l'une quelconque des revendications précédentes, **caractérisé en ce que** les deuxièmes moyens d'accouplement comportent une jupe en (48) matériau plastique isolant enveloppant au moins partiellement la tête de vis (24) et restant solidaire de la tête de vis dans l'état de désolidarisation.

8. Dispositif selon l'une quelconque des revendications précédentes, **caractérisé en ce que** la tête de vis (24) comporte un relief de serrage (26) identique au relief de serrage (32) de l'embout, l'embout (12) étant conformé de telle manière que le relief de serrage (26) de la tête de vis est inaccessible tant que le relief d'accouplement (36) est en position d'engagement.

9. Dispositif selon la revendication 8, **caractérisé en ce que** le relief de serrage (26) de la tête de vis et le relief de serrage (32) de l'embout sont en creux.

10. Kit comportant :
- un appareillage électrique pourvu d'au moins une borne électrique de raccordement à vis,
- au moins un dispositif de montage par vissage selon l'une des revendications 1 à 9, pour fixer la borne de raccordement à un conducteur électrique.

## Patentansprüche

1. Montage-Schraubvorrichtung mit Anziehmomentbegrenzung, die
- eine Schraube (10) mit einem Schraubenkopf (24) und einem Gewindeschaft (22), welche eine geometrische Bezugsachse (20) bilden, sowie
- einen einstückigen trennbaren Spannzapfen (12) umfaßt, der
- einen Spannkopf (30) mit einem Spannprofil (32), das dazu dient, mit einem Spannwerkzeug zusammenzuwirken,
- ein Kopplungsprofil (36), das dazu dient, mit dem Schraubenkopf (24) zusammenzuwirken, und in einer Einsteckposition im Schraubenkopf (24) eine rotationswirksame Kopplung zwischen dem Spannzapfen (12) und dem Schraubenkopf (10) um die geometrische Bezugsachse (20) gewährleistet sowie in Richtung einer Abzugsposition vom Schraubenkopf (24) längs der geometrischen Bezugsachse (20) geradlinig verschoben werden kann,
- und eine zwischen dem Spannkopf (30) und dem Kopplungsprofil (36) ausgebildete Sollbruchzone (38) umfaßt, die den Spannkopf (30) so mit dem Kopplungsprofil (36) verbindet, daß der Spannkopf (30) und das Kopplungsprofil (36) in bezug auf die geometrische Bezugsachse rotationswirksam miteinander gekoppelt sind, wobei die Sollbruchzone (38) so dimensioniert ist, daß sie bricht, wenn sie mit einem Drehmoment beaufschlagt wird, das einen festgelegten Bruchschwellwert überschreitet,
welche Vorrichtung **dadurch gekennzeichnet ist, daß** sie darüber hinaus
- erste Kopplungsmittel (40, 60), die dazu dienen, den Spannkopf und das Kopplungsprofil nach dem Bruch der Sollbruchzone translationswirksam längs der geometrischen Bezugsachse miteinander zu verbinden,
- sowie zweite Kopplungsmittel (50) umfaßt, die dazu dienen, den Schraubenkopf (24) und das Kopplungsprofil (36) in der Koppelstellung bei noch nicht erfolgtem Bruch der Sollbruchzone translationswirksam längs der geometrischen Bezugsachse miteinander zu verbinden, wobei die zweiten Kopplungsmittel in eine Trennstellung überführt werden können, die ein Verbringen des Kopplungsprofils in die Abzugsstellung erlaubt, wenn nach dem Bruch der Sollbruchzone die zweiten Kopplungsmittel mit einer Kraft oder einem Drehmoment beaufschlagt werden, die einen festgelegten Schwellwert überschreiten.

2. Vorrichtung nach Anspruch 1, **dadurch gekennzeichnet, daß** die zweiten Kopplungsmittel
- einen rotationswirksam mit dem Spannkopf verbundenen ersten Abschnitt (47),
- einen rotationswirksam mit dem Schraubenkopf verbundenen zweiten Abschnitt (28) sowie
- einen dritten, trennbaren, Zwischenabschnitt (50) umfassen, der den ersten Abschnitt mit dem zweiten Abschnitt verbindet, wobei der dritte Abschnitt so dimensioniert ist, daß er nicht bricht, solange die Sollbruchzone nicht gebrochen ist, bzw. bricht und dadurch die zweiten Kopplungsmittel in die Abzugsstellung überführt, wenn die Sollbruchzone (38) gebrochen ist und der dritte Abschnitt mit einem Drehmoment beaufschlagt wird, der einen festgelegten, unter dem festgelegten Bruchschwellwert liegenden Trennschwellwert überscheitet.

3. Vorrichtung nach Anspruch 2, **dadurch gekennzeichnet, daß** die zweiten Kopplungsmittel in der geometrischen Bezugsachse zwischen dem ersten Abschnitt und dem zweiten Abschnitt eine geringere Verdrehsteifigkeit aufweisen als der Spannzapfen.

4. Vorrichtung nach Anspruch 3, **dadurch gekennzeichnet, daß** die ersten Kopplungsmittel und die zweiten Kopplungsmittel als einstückiger Block (14) aus einem Isolierkunststoff ausgeführt sind.

5. Vorrichtung nach Anspruch 4, **dadurch gekennzeichnet, daß** der Spannzapfen (12) aus Metall besteht.

6. Vorrichtung nach Anspruch 5, **dadurch gekennzeichnet, daß** der Block (14) aus Isolierkunststoff den Spannzapfen aus Metall umgibt und dabei einen Zugang zum Spannprofil ermöglicht.

7. Vorrichtung nach irgendeinem der vorhergehenden Ansprüche, **dadurch gekennzeichnet, daß** die zweiten Kopplungsmittel eine Kappe (48) aus Isolierkunststoff umfassen, die den Schraubenkopf (24) zumindest teilweise abdeckt und in der Trennstellung fest mit dem Schraubenkopf verbunden bleibt.

8. Vorrichtung nach irgendeinem der vorhergehenden Ansprüche, **dadurch gekennzeichnet, daß** der Schraubenkopf (24) ein Spannprofil (26) aufweist, das mit dem Spannprofil (32) des Spannzapfens übereinstimmt, wobei der Spannzapfen (12) so ausgebildet ist, daß das Spannprofil (26) des Schraubenkopfes unzugänglich ist, solange sich das Kopplungsprofil (36) in der Einsteckposition befindet.

9. Vorrichtung nach Anspruch 8, **dadurch gekennzeichnet, daß** das Spannprofil (26) des Schraubenkopfes und das Spannprofil (32) des Spannzapfens als Hohlprofile ausgebildet sind.

10. Einheit, die
- ein elektrisches Schaltgerät mit mindestens einer elektrischen Schraubklemme,
- sowie mindestens eine Montage-Schraubvorrichtung nach einem der Ansprüche 1 bis 9 zur Befestigung der Anschlußklemme auf einem elekrischen Leiter umfaßt.

## Claims

1. Assembly device by screwing with tightening torque limiting, comprising:
- a screw (10) provided with a screw head (24) and with a threaded shank (22) defining a geometric reference axis (20),
- a breakable monoblock tightening end-piece (12) comprising:
- a tightening head (30) having a tightening profile (32) to co-operate with a tightening tool,
- a coupling profile (36) to co-operate with the screw head (24), performing coupling in rotation around the geometric reference axis (20) between the tightening end-piece (12) and the screw head (24) in an engaged position with the screw head (24), and movable to a disengaged position by translation with respect to the screw head (24) with respect to the geometric reference axis (20),
- a breaking zone (38) situated between the tightening head (30) and the coupling profile (36) and joining the tightening head (30) to the coupling profile (36) in such a way that the tightening head (30) and the coupling profile (36) are secured in rotation around the geometric reference axis, the breaking zone (38) being dimensioned so as to break when it is subjected to a torque exceeding a predetermined breaking threshold,
**characterized in that** it comprises in addition:
- first coupling means (40, 60) to secure the tightening head and the coupling profile in translation according to the geometric reference axis when the breaking zone is broken,
- second coupling means (50) to secure the screw head (24) to the coupling profile (36) in translation with respect to the geometric reference axis in the coupled position so long as the breaking zone is not broken, the second coupling means being able to move to a released state enabling the coupling profile to be moved to the disengaged position when the breaking zone is broken and a force or torque exceeding a given threshold is applied to the second coupling means.

2. Device according to claim 1, **characterized in that** the second coupling means comprise:
- a first portion (47) secured in rotation to the tightening head,
- a second portion (28) secured in rotation to the screw head, and
- a breakable intermediate third portion (50) securing the first portion to the second portion, the third portion being dimensioned so as not to break so long as the breaking zone is not broken and to break and thus to make the second coupling means move to the disengaged state when the breaking zone (38) is broken and the third portion is subjected to a torque exceeding a predetermined separation threshold lower than the predetermined breaking threshold.

3. Device according to claim 2, **characterized in that** the second coupling means have a torsional rigidity along the geometric reference axis between the first and second portion that is lower than that of the end-piece.

4. Device according to claim 3, **characterized in that** the first coupling means and the second coupling means are achieved in a single part (14) made of insulating plastic material.

5. Device according to claim 4, **characterized in that** the end-piece (12) is made of metal.

6. Device according to claim 5, **characterized in that** the part (14) made of insulating plastic material envelops the metal end-piece leaving an access to the tightening profile.

7. Device according to any one of the foregoing claims, **characterized in that** the second coupling means comprise a skirt (48) made of insulating plastic material at least partially enveloping the screw head (24) and remaining secured to the screw head in the released state.

8. Device according to any one of the foregoing claims, **characterized in that** the screw head (24) comprises an identical tightening profile (26) to the tightening profile (32) of the end-piece, the end-piece (12) being shaped in such a way that the tightening profile (26) of the screw head is inaccessible so long as the coupling profile (36) is in the engaged position.

9. Device according to claim 8, **characterized in that** the tightening profile (26) of the screw head and the tightening profile (32) of the end-piece are hollow.

10. Kit comprising:
- an electrical apparatus provided with at least one screw-connected electrical terminal connection,
- at least one assembly device by screwing according to one of the claims 1 to 9 to fix the connection terminal to an electrical conductor.
